# NEW EUROPEAN PATENT SPECIFICATION

(11) **EP 0 663 146 B2**
(45) Date of publication and mention of the opposition decision: **26.03.2014**
(45) Mention of the grant of the patent: 30.05.2001
(21) Application number: 95200027.1
(22) Date of filing: 09.01.1995
(51) Int. Cl.: A01J 7/00

(54) **A construction for automatically milking animals**
Gerät zum automatischen Melken von Tieren
Dispositif de traite automatique d'animaux

(30) Priority: 13.01.1994 NL 9400054
(43) Date of publication of application: 19.07.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 551 957
- EP-A1- 0 306 579
- NL-A- 9 200 098

## Description

The present invention relates to a construction according to the preamble of claim 1.

Such a construction is known from EP-A 0 551 957.

According to the invention the first and respective second computers are connected for data exchange whereby, when an animal has been recognised by the recognition system, data concerning the animal is communicated from the first to the second computer, following which data communication the second computer may control the respective milking robot and milking machine to perform the milking and wherein data held in the second computer enable performance of the milking under the control of the second computer even if the data communication from the first computer is unsatisfactory.

According to a preferred feature of the invention, a plurality of milking robots is jointly connected to the first computer. According to another preferred feature of the invention, the second computers are connected to a cow recognition system. By means of the cow recognition system it is possible to identify an animal present in the milking parlour prior to milking same.

According to yet another preferred feature of the invention, the second computers comprise primary data being available as a minimum to enable a milking robot to function as an autonomous unit. According to a preferred feature of the invention, the primary data consist of a number related to an animal, the corresponding teat co-ordinates, the relevant animal's progressive average of the dead milking time and that of the milking time, the time which must have elapsed at least between the relevant animal's milkings and the udder record including data concerning the teat lenghts and the definition of the teats to be milked. A milking robot disconnected from the joint computer is thus capable of continuing to milk as an autonomous unit by means of the second computer, at a very low level of information.

According to another preferred feature of the invention, the cow recognition systems are connected to the joint computer. The second computers are thus capable of exchanging data with the joint computer through the cow recognition system.

According to still another preferred feature of the invention, the joint computer comprises the primary data of the second computers as well as secondary data, such as e.g. the milk record, by means of which, after verification whether the animal appears in the collection of milk records, it is determined whether the animal is to be milked, whether the positions of the animal's teats are known, whether the milk should be separated, whether the animal should be milked under supervision, whether the animal is in the training stage and/or whether a shocker is to be activated to cause the animal to move away from the milking parlour.

According to a preferred feature of the invention, with each milking, the collected primary data concerning an animal are stored in both the second computer and the joint computer, while the history of an animal's primary data stored in the joint computer is greater than the history of the relevant animal's primary data stored in the second computer. According to a preferred feature of the invention, the primary data of X milkings of an animal are always stored in the second computers, whereas the primary data of 3/2 X milkings of an animal are always stored in the joint computer. As a limited memory storage capacity will suffice for the second computers, the costs of acquisition of the latter are relative low.

According to a preferred feature of the invention, the milking machine comprises a personal computer (PC) which is capable of being connected to the joint computer and through which PC, upon connection, data such as the milk yield of each animal, separation of an animal, the presence of mastitis etc. can be read from the joint computer into the PC and can be processed in a management program provided in the PC. The dairy farmer is capable of retrieving and examining an amount of data on an animal at any point in time by means of the PC, and he is thus capable of exercising appropriate supervision over all the herd.

In order to prevent that a power failure in the electricity system renders one, or a plurality, of the above computers inoperative, according to a further feature of the invention a computer includes a power source of its own, e.g. an accumulator which can supply current to a computer independently.

The invention will now be further explained with reference to the accompanying drawing.

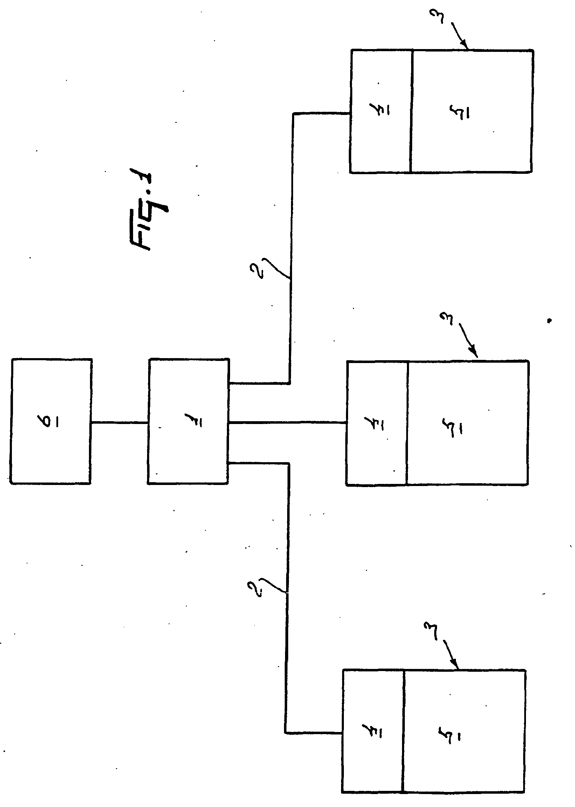

Figure 1 shows a schematic arrangement of a milking machine according to the invention.

The milking machine comprises a joint computer 1 to which, in the present exemplary embodiment, a trio of milking robots 3 provided with a cow recognition system 4 is connected through lines 2. It will be obvious that the invention is not limited to the present exemplary embodiment, but that it is optional to connect any arbitrary number of milking robots 3 to the joint computer 1.

The operation of the before-mentioned milking machine will be detailed hereinafter.

By means of the before-mentioned milking robots 3 it is practicable to milk automatically a group of e.g. seventy animals, without supervision, twenty-four hours a day, seven days a week. Moreover, the animals are free to enter a milking parlour of a robot 3, and upon entry, the relevant animal is identified by means of the animal recognition system. For this purpose, an animal belonging to the group has been allocated a number related to the respective animal. A method known by itself is adopted for reading out the number, whereby a transponder arranged on the neck of each animal is read out by a read-out unit disposed at or near the milking parlour. The number traced by the cow recognition system 4 is subsequently passed on to a second computer 5 belonging to the relevant robot 3, after which the second computer 5, through the cow recognition system and via the line 2, retrieves from the joint computer 1 the animal's record stored in a memory of the joint computer 1. The data on a given animal stored in the joint computer 1 are divided into two components separated from each other, i.e. the milk record and the udder record.

The udder record of an animal comprises preferably the following data:
- The teat lengths.
- The definition of the teats to be milked.

The milk record of an animal comprises the following data:
- Is the cow known?
- Are teat positions known?
- Is the cow to be milked?
- Should milking take place under the supervision of an operator?
- Is the milk obtained to be separated?
- Is the cow in its training stage?
- Is a shocker (electric cattle goad) to be activated in order to cause an animal to move away from the milking parlour?

After the data have been retrieved by a relevant second computer 5, the second computer decides whether an animal is allowed to be milked or whether it should leave the milking parlour.

If the second computer 5 decides that the animal should be milked, the second computer 5 reads out the following data on the relevant animal at the joint computer 1 through the line 2:
- Progressive average of the dead milking time.
- Progressive average of the mean milking time.
- The teat co-ordinates.

In reliance upon the above data, the milking robot 3 is subsequently capable of connecting teat cups automatically to the animal's teats and of controlling parts of the milking machine, such as a pulsator and a vacuum controller. For the farmer's information and for monitoring the milking process, various signals such as for the milk temperature, the electrical conductivity of the milk, the amount of milk produced by the animal per unit of time etc., are sent to the joint computer 1 through sensors, not shown, during the milking. On the basis of these signals the dairy farmer's attention can be drawn, by a list of items requiring attention, to the fact that e.g. a certain animal suffers from mastitis or that its milk yield is too low.

Upon completion of the milking, the following data collected by the second computer 5 during the milking time are written to the joint computer 1:
- Milk record.
- Udder record.
- Point of time of the milking.
- Progressive average of the dead milking time.
- Progressive average of the milking time.
- Teat co-ordinates.
- Animal number.

The following data on each animal's milking are stored in the second computer 5:
- Teat co-ordinates.
- Progressive average of the dead milking time.
- Progressive average of the milking time.
- Point of time of the milking.

The joint computer 1 is different from the second computers 5 in that the history of the data for each animal stored in the joint computer 1 is greater than the history of the respective animal stored in a second computer 5. In a preferred embodiment of the invention, the data on the X most recent milkings of an animal are stored in the second computer 5, whereas the data on 3/2 X milkings of the relevant animal are always stored in the joint computer 1. The total number of milkings that can be stored in any second computer 5 of a milking robot 3 is preferably 300.

If no, or not an appropriate, data exchange between a second computer 5 and the joint computer 1 is possible, e.g. due to interruption of line 2 or due to signal interference, a relevant milking robot 3 is capable of going on with milking by means of its second computer 5 as an autonomous unit. In this condition, the number of the animal which is in the milking parlour at that time is retrieved from the cow recognition system 4 by the second computer 5, and, in contrast with the before-mentioned condition in which a satisfactory data exchange between the joint computer 1 and second computer 5 takes place, the record of animal data is read from the memory of the second computer 5 itself.

The data being read out by means of the animal number are:
- Udder record.
- Progressive average of the dead milking time.
- Progressive average of the milking time.
- Teat co-ordinates.
- Point of time of the milking.

On the basis of the last-mentioned data, the robot 3 is capable of connecting the teat cups to the teats of the relevant animal, and further parts of the milking machine such as the pulsator, the vacuum controller etc. are capable of being controlled. Upon completion of the milking, the following data collected during the milking are stored in the second computer 5:
- Progressive average of the dead milking time.
- Progressive average of the milking time.
- Teat co-ordinates.
- Point of time of the milking.
- Udder record.

For the purpose of drawing the dairy farmer's attention to the fact that a fault exists in the data exchange between the joint computer 1 and the respective milking robot 3, the milking machine is provided with an alarm system, not shown here.

By means of a personal computer 6 belonging to the milking machine and capable of being connected to the joint computer 1, it can thus be brought to the dairy farmer's notice that the defect is to be remedied. Moreover, the dairy farmer is capable of retrieving at any time data on a particular animal or group of animals by means of the personal computer 6. The dairy farmer is thus in a position to exercise appropriate supervision of his cattle and milking machine.

## Claims

1. Construction for milking animals, such as cows, comprising at least one milking machine a first computer and at least one milking robot, the or each milking robot being associated with its own animal recognition system and second computer, the first computer storing data in respect of each animal, **characterized in that** the first and respective second computers are connected for data exchange whereby. when an animal has been recognised by the recognition system, data concerning the animal is communicated from the first to the second computer. following which data communication the second computer may control the respective milking robot and milking machine to perform the milking and wherein data held in the second computer enable performance of the milking under the control of the second computer even if the data communication from the first computer is unsatisfactory.

2. A milking machine according to claim 1, **characterized in that** a plurality of milking robots (3) is capable of being jointly connected to the first computer (1).

3. A milking machine according to claim 1 or 2, **characterized in that** the second computers (5) are connectable to a cow recognition system (11) of the respective milking robot (3).

4. A milking machine according to any one of the preceding claims, **characterized in that** the second computers (5) comprise primary data being available as a minimum to enable a milking robot (3) to function as an autonomous unit.

5. A milking machine according to claim 4, **characterized in that** the primary data consist of a number related to an animal, the corresponding teat co-ordinates, the relevant animal's progressive average of the dead milking time and that of the milking time, the time which must have elapsed at least between the relevant animal's milkings and the udder record including data concerning the teat lengths and the definition of the teats to be milked.

6. A milking machine according to claim 5, **characterized in that** each of the cow recognition systems is connected to the first computer (1).

7. A milking machine according to claim 5 or 6, **characterized in that** the first computer (1) comprises the primary data of the second computers (5) as well as secondary data, such as the milk record, by means of which, after verification whether the animal appears in the collection of milk records, it is determined whether the animal is to be milked, whether the positions of the animal's teats are known, whether the milk should be separated, whether the animal should be milked under supervision, whether the animal is in the training stage and/or whether a shocker is to be activated to cause the animal to move away from the milking parlour.

8. A milking machine according to one or more of claims 5-7, **characterized in that**, with each milking, the collected primary data concerning an animal are stored in both the second computer and the first computer, while the history of an animal's primary data stored in the first computer is greater than the history of the relevant animal's primary data stored in the second computer (5).

9. A milking machine according to claim 8, **characterized in that** the second computer (5) always stores the primary data of the latest X milkings of an animal, whereas the first computer (1) always stores the primary data of 3/2 X milkings of the relevant animal.

10. A milking machine according to one or more of the preceding claims, **characterized in that** the milking machine comprises a personal computer (PC) (6) which is capable of being connected to the first computer (1) and through which PC (6), upon connection, data such as the milk yield of each animal, separation of an animal, the presence of mastitis etc. can be read from the first computer (1) into the PC (6) and can be processed in a management program provided in the PC (6).

11. A milking machine according to one or more of the preceding claims, **characterized in that** at least one of the computers (1; 5, 6) include a power source of its own, e.g. an accumulator which can supply current to the computer (1; 5, 6) independently.

## Patentansprüche

1. Vorrichtung zum Melken von Tieren, wie z. B. Kühen, mit mindestens einer Melkmaschine, einem ersten Computer und mindestens einem Melkroboter, wobei der oder jeder Melkroboter mit seinem eigenen Tiererkennungssystem und zweiten Computer verbunden ist, wobei der erste Computer Daten über jedes Tier speichert,
**dadurch gekennzeichnet, daß** der erste und die entsprechenden zweiten Computer zum Zwecke des Datenaustausches miteinander verbunden sind, wobei nach Erkennen eines Tieres durch das Erkennungssystem Daten über das Tier vom ersten zum zweiten Computer übertragen werden, wobei der zweite Computer nach dieser Datenübertragung den jeweiligen Melkroboter und die Melkmaschine zur Durchführung des Melkvorganges steuern kann, und wobei in dem zweiten Computer gespeicherte Daten die Durchführung des Melkvorganges unter Steuerung durch den zweiten Computer ermöglichen, wenn die Datenübertragung vom ersten Computer unzureichend ist.

2. Melkmaschine nach Anspruch 1,
**dadurch gekennzeichnet, daß** mehrere Melkroboter (3) gemeinsam an den ersten Computer (1) anschließbar sind.

3. Melkmaschine nach Anspruch 1 oder 2,
**dadurch gekennzeichnet, daß** die zweiten Computer (5) mit einem Kuherkennungssystem (4) des jeweiligen Melkroboters (3) verbindbar sind.

4. Melkmaschine nach einem der vorhergehenden Ansprüche,
**dadurch gekennzeichnet, daß** die zweiten Computer (5) Primärdaten enthalten, die als Minimum zur Verfügung stehen, um einen Melkroboter (3) in die Lage zu versetzen, als autonome Einheit zu arbeiten.

5. Melkmaschine nach Anspruch 4,
**dadurch gekennzeichnet, daß** die Primärdaten bestehen aus einer einem Tier zugeordneten Zahl, den entsprechenden Zitzenkoordinaten, dem dynamischen Mittelwert der Totzeit und der Melkzeit des jeweiligen Tieres, der Zeit, die zwischen den Melkdurchgängen des jeweiligen Tieres mindestens verstrichen sein muß, und dem Euterprotokoll, das Daten über die Zitzenlängen und die Definition der zu melkenden Zitzen enthält.

6. Melkmaschine nach Anspruch 5,
**dadurch gekennzeichnet, daß** jedes der Kuherkennungssysteme mit dem ersten Computer (1) verbunden ist.

7. Melkmaschine nach Anspruch 5 oder 6,
**dadurch gekennzeichnet, daß** der erste Computer (1) die Primärdaten der zweiten Computer (5) sowie Sekundärdaten, wie z. B. das Melkprotokoll, umfaßt, mit deren Hilfe nach Überprüfung, ob das Tier in der Sammlung der Melkprotokolle enthalten ist, festgestellt wird, ob das Tier gemolken werden soll, ob die Positionen der Zitzen des Tieres bekannt sind, ob die Milch ausgesondert werden sollte, ob das Tier unter Aufsicht gemolken werden sollte, ob sich das Tier in der Ausbildungsphase befindet, und/oder ob ein Schockgerät einzusetzen ist, um das Tier zum Verlassen des Melkstandes zu bewegen.

8. Melkmaschine nach einem oder mehreren der Ansprüche 5 bis 7,
**dadurch gekennzeichnet, daß** bei jedem Melkvorgang die gesammelten Primärdaten über ein Tier sowohl im zweiten Computer als auch im ersten Computer gespeichert werden, wobei der in dem ersten Computer gespeicherte Datenstamm der Primärdaten eines Tieres größer ist als der in dem zweiten Computer (5) gespeicherte Datenstamm der Primärdaten des betreffenden Tieres.

9. Melkmaschine nach Anspruch 8,
**dadurch gekennzeichnet, daß** der zweite Computer (5) stets die Primärdaten der letzten X Melkvorgänge eines Tieres speichert, während der erste Computer (1) stets die Primärdaten von 3/2 X Melkvorgängen des betreffenden Tieres speichert.

10. Melkmaschine nach einem oder mehreren der vorhergehenden Ansprüche,
**dadurch gekennzeichnet, daß** die Melkmaschine einen Personal-Computer (PC) (6) umfaßt, der an den ersten Computer (1) anschließbar ist, und wobei über den PC (6) nach dem Anschluß Daten wie z. B. die Milchleistung jedes Tieres, die Absonderung eines Tieres, das Vorhandensein von Mastitis, usw. aus dem ersten Computer (1) in den PC (6) übertragen und in einem in dem PC (6) vorhandenen Management-Programm verarbeitet werden können.

11. Melkmaschine nach einem oder mehreren der vorhergehenden Ansprüche,
**dadurch gekennzeichnet, daß** mindestens einer der Computer (1; 5, 6) eine eigene Stromversorgung, wie z. B. einen Akku, aufweist, der den Computer (1; 5, 6) unabhängig mit Strom versorgen kann.

## Revendications

1. Installation de traite d'animaux, tels que des vaches, comportant au moins une machine de traite, un premier ordinateur et au moins un robot de traite, le ou chaque robot de traite étant associé avec son propre système de reconnaissance d'animal et un second ordinateur, le premier ordinateur mémorisant des données concernant chaque animal, **caractérisée en ce que** les premier et seconds ordinateurs respectifs sont connectés pour un échange de données de sorte que, lorsqu'un animal a été reconnu par le système de reconnaissance, les données concernant l'animal sont communiquées du premier vers le second ordinateur, communication de données après laquelle le second ordinateur peut commander le robot de traite respectif et la machine de traite afm d'effectuer la traite, et des données maintenues dans le second ordinateur permettent la mise en oeuvre de la traite sous la commande du second ordinateur même si la communication de données à partir du premier ordinateur n'est pas satisfaisante.

2. Machine de traite selon la revendication 1, **caractérisée en ce qu'**une pluralité de robots de traite (3) peuvent être reliés conjointement au premier ordinateur (1).

3. Machine de traite selon la revendication 1 ou 2, **caractérisée en ce que** les seconds ordinateurs (5) peuvent être connectés à un système de reconnaissance de vache (11) du robot de traite respectif (3).

4. Machine de traite selon l'une quelconque des revendications précédentes, **caractérisée en ce que** les seconds ordinateurs (5) comportent des données principales qui sont au minimum disponibles pour permettre à un robot de traite (3) de fonctionner en tant qu'unité autonome.

5. Machine de traite selon la revendication 4, **caractérisée en ce que** les données principales sont constituées d'un numéro concernant un animal, des coordonnées de trayon correspondant, de la moyenne progressive du temps sans traite d'un animal concerné et de celle du temps de traite, le temps qui doit s'être au moins écoulé entre les traites de l'animal concerné et de l'enregistrement du pis comportant les données concernant les longueurs de trayon et la définition des trayons à traire.

6. Machine de traite selon la revendication 5, **caractérisée en ce que** chacun des systèmes de reconnaissance de vache est connecté au premier ordinateur (1).

7. Machine de traite selon la revendication 5 ou 6, **caractérisée en ce que** le premier ordinateur (1) comporte les données principales des seconds ordinateurs (5) de même que des données secondaires, telles que l'enregistrement de lait, par l'intermédiaire duquel, après qu'on ait vérifié si l'animal apparaît dans la collection des enregistrements de lait, on détermine si l'animal doit être trait, si les positions des trayons de l'animal sont connues, si le lait doit être séparé, si l'animal doit être trait sous surveillance, si l'animal est dans sa période de mise en forme et/ou si un dispositif à secousse doit être actionné pour entraîner l'animal à s'éloigner du box de traite.

8. Machine de traite selon l'une quelconque des revendications 5 à 7, **caractérisée en ce que**, avec chaque traite, les données principales recueillies concernant un animal sont mémorisées à la fois dans le second ordinateur et dans le premier ordinateur, tandis que l'historique des données principales d'un animal mémorisé dans le premier ordinateur est plus important que l'historique des données principales de l'animal concerné mémorisé dans le second ordinateur (5).

9. Machine de traite selon la revendication 8, **caractérisée en ce que** le second ordinateur (5) mémorise toujours les données principales des X dernières traites d'un animal, tandis que le premier ordinateur (1) mémorise toujours les données principales de 3/2 X traites de l'animal concerné.

10. Machine de traite selon l'une quelconque des revendications précédentes, **caractérisée en ce que** la machine de traite comporte un ordinateur personnel (PC) (6) qui peut être connecté au premier ordinateur (1), et PC (6) par l'intermédiaire duquel, après connexion, des données telles que le rendement en lait de chaque animal, la séparation d'un animal, la présence de mastite, etc. peuvent être lues à partir du premier ordinateur (1) dans le PC (6), et peuvent être traitées dans un programme de gestion fourni dans le PC (6).

11. Machine de traite selon l'une quelconque des revendications précédentes, **caractérisée en ce qu'**au moins un des ordinateurs (1 ; 5. 6) comporte une source d'électricité propre, par exemple un accumulateur qui peut envoyer du courant à l'ordinateur (1 ; 5, 6) de manière indépendante.
